# EUROPEAN PATENT APPLICATION

(11) **EP 3 812 074 A1**
(43) Date of publication of application: **28.04.2021**
(21) Application number: 20200308.3
(22) Date of filing: 06.10.2020
(51) Int. Cl.: B23H 1/08, B23H 9/00

(54) **A COMPOUND AND A METHOD OF USING THE COMPOUND**

(30) Priority: 14.10.2019 GB 201914825
(71) Applicant: Rolls-Royce plc, London N1 9FX (GB)
(72) Inventor: Ahmed, Shamraze, Derby, Derbyshire DE24 8BJ (GB); Clare, Adam, Derby, Derbyshire DE24 8BJ (GB); Kell, James, Derby, Derbyshire DE24 8BJ (GB); Clark, Daniel, Derby, Derbyshire DE24 8BJ (GB); Speidel, Alistair, Derby, Derbyshire DE24 8BJ (GB); Castro Palacios, Monica, Derby, Derbyshire DE24 8BJ (GB); Smith, Peter, Derby, Derbyshire DE24 8BJ (GB); Novovic, Donka, Derby, Derbyshire DE24 8BJ (GB)
(74) Representative: Rolls-Royce plc

(57) **Abstract**

A dielectric gel (160) for use in electro-discharge machining, comprising comprises a liquid solvent phase entrapped in a three-dimensionally cross-linked fibre network and a method for removing / disintegrating fasteners using such a gel (160) as dielectric fluid.

## Description

### Field of the Disclosure

The present disclosure relates to a dielectric gel and particularly, but not exclusively, to a method of electro-discharge machining an article using the dielectric gel.

### Background to the Disclosure

Electric Discharge Machining (EDM) is a well-known technique that is used for the machining of metal materials. EDM as the title suggests creates an electrical discharge by the removal of material from a workpiece. The electrical discharge phenomenon results from an electrical voltage being applied between an electrode and the workpiece. Typically, the electrical voltage is applied in the form of a high frequency pulsed waveform. In conventional EDM machining operations, the electrode and the workpiece are both immersed in a dielectric fluid bath.

Control of the voltage, pulse frequency, and electrode-to-workpiece gap enable the electrical discharge, and hence the material removal, to be controlled. The mark space ratio of the spark duration versus the quench duration is controlled to ensure that the temperatures of the workpiece and the electrode bulk material do not reach their corresponding melting temperatures.

Complex mechanical assemblies such as, for example, turbofan gas turbine engines, are often required to be disassembled for service, maintenance or repair purposes. The separation of such large assemblies into smaller sub-assemblies or component parts is typically labour intensive with the requirement to separate bolted joints that have been subjected to extremes of thermal and/or mechanical conditions. Such bolted joints are frequently mechanically seized and require machining operations in order to separate them.

Conventional machining techniques often cannot be used to separate such joints assemblies due to the work hardening nature of the materials. Furthermore, there are often access limitations resulting from the design of the assembly that result in fasteners that have very limited access. Such limited access prohibits the use of conventional machining techniques because the machine tool cannot reach the fastener.

Electrical discharge machining relies upon dielectric media in which to develop sparking for material removal. In some circumstances where material volume removal maybe small or access may be difficult an alternate means by which provide a dielectric might be required. In addition, containment of debris may be required.

Here, the use of an EDM dielectric that is gel like and therefore is useful in such applications is proposed. This may be dosed to the work through external delivery or maybe loaded within custom electrodes.

### Statements of Disclosure

According to a first aspect of the present disclosure there is provided a dielectric gel for use in electro-discharge machining (EDM), comprising a liquid solvent phase entrapped in a three-dimensionally cross-linked fibre network.

The mechanical properties of a dielectric gel means eliminates the risk of dielectric leaking away from the region between the erosion electrode and the article to be eroded and thereby possibly damaging adjacent hardware.

The viscosity and flow properties of the dielectric gel can be tailored to the specific EDM application, for example depending on the geometry and inclination of the EDM site. As an example, if the surface on which the EDM operation is to be carried out is angled relative to the horizontal then the viscosity may be increased in order to prevent unwanted flow of the dielectric gel away from the EDM site.

The use of a dielectric gel also reduces the volume of dielectric material required for the EDM operation, thus making the process less costly and simpler to implement for a user.

During the course of the EDM process both eroded debris and electrode material is ejected from the erosion site and is collected in the dielectric gel that encloses the EDM machining location. This reduces the quantity of debris that leaves the EDM machining location and may contaminate any adjoining or surrounding apparatus.

The increased viscosity of the dielectric gel in comparison to a dielectric fluid means that a smaller volume of dielectric material is required for the EDM process.

The dielectric gel can be deposited onto the article prior to the EDM process to enclose the article prior to the EDM erosion process, thereby making the process more convenient for a user.

Optionally, the liquid solvent phase comprises a polar liquid selected from the group consisting of water, arsenic, bismuth, gallium, germanium, and silicon.

In one arrangement, the gel is a hydrogel. In a hydrogel the liquid solvent phase is commonly water. However alternative hydrogel formulations may use an alternative or an additional polar liquid such as, for example, gallium, germanium, and/or silicon.

Optionally, the three-dimensionally cross-linked fibre network comprises hydrophilic polymers.

A hydrogel is typically formed as a network of hydrophilic polymer chains. The hydrophilic polymer chains are bound to one another by cross-links, which prevents the hydrogel network from dissolving with the high concentration of polar solvent. The hydrophilic polymer may be a natural hydrophilic polymer or a synthetic hydrophilic polymer.

The hydrogel formulation may have a shear thinning characteristic that results in 'self-healing' surface behaviour. Such 'self-healing' hydrogels rapidly reform broken bonds, which may be beneficial in expelling gaseous bubbles resulting from the EDM process.

The self-healing property, which involves, for example, mass transfer and reconnection of broken links with the matrix, occurs due to either non-covalent or covalent bonds.

Optionally, the liquid solvent phase comprises an organic solvent and water.

In another arrangement, the gel is an organogel.

Optionally, the organic solvent is selected from the group consisting of organic solvents (such as, for example, aliphatic and aromatic hydrocarbons), silicone oil, dimethyl sulfoxide, isopropyl myristate, and vegetable oils. The solvent is apolar, in contrast to the polar solvent used in hydrogels. In one arrangement, the hydrocarbon is hexane. The vegetable oil may be sunflower oil or corn oil.

Optionally, the three-dimensionally cross-linked fibre network comprises a fibrous structure formed by a gelator.

The gelator undergoes physical and/or chemical interaction to form the fibrous structures, which entangle with one another to form the three-dimensionally cross-linked fibre network.

Optionally, the gelator is selected from the group consisting of lecithin, isopropyl myristate, isopropyl palmitate, dibutyllauroylglutamide, propylene glycol, polyethylene, polyhydric alcohols, sorbitan monostearate, sorbitan monopalmitate, and N-lauryl-L-alanine methyl ester.

The gelator is either polymeric (such as polyethylene, polymethyl methacrylate), low molecular weight organogelator (such as fatty acids, n-alkanes, n-alanine), or biomolecule (such as lecithin).

According to a second aspect of the present disclosure there is provided a method of electro-discharge machining (EDM) an article, the article being located in a workpiece, the method comprising the steps of:
providing an EDM device comprising an erosion electrode, and a ground electrode;
positioning the erosion electrode proximal to the article;
positioning the ground electrode in conductive connection with the article;
providing a dielectric gel according to any one of Claims 1 to 7, to a region bridging the erosion electrode and the article;
moving the erosion electrode towards the article and into the dielectric gel; and
generating an electrical potential in the erosion electrode sufficient to cause a breakdown in a gap between the erosion electrode and the article, to thereby cause a portion of the article to be eroded, the eroded portion being suspended in the dielectric gel.

In conventional EDM operations the dielectric is provided as a fluid that floods the region between the erosion electrode and the article to be eroded. In order to sustain the EDM operation it is necessary to maintain the flood of dielectric fluid in this region.

While it is possible to provide a hood or guard over the region between the erosion electrode and the article to be eroded to enclose the region, the leakage of dielectric fluid becomes inevitable. In situations where the EDM operation is being carried out *in situ*, such leakage can be undesirable and/or detrimental to the condition of the adjacent hardware.

The use of a hood or guard can be costly because it must be manufactured to precisely conform to the profile and features of the hardware surrounding the article to be eroded. Furthermore, the EDM method requires that the hood or guard must be fitted over and/or around the article before the EDM operation can start. This can complicate the EDM operation making it costly and time-consuming for a user.

The use of a dielectric gel eliminates the need for a hood or guard over the article to be EDM eroded. This makes the EDM process simpler and easier for a user to implement.

The mechanical properties of a dielectric gel eliminates the risk of dielectric leaking away from the region between the erosion electrode and the article to be eroded and thereby possibly damaging adjacent hardware.

The use of a dielectric gel also reduces the volume of dielectric material required for the EDM operation, thus making the process less costly and simpler to implement for a user.

During the course of the EDM process both eroded debris and electrode material is ejected from the erosion site and is collected in the dielectric gel that encloses the EDM machining location. This reduces the quantity of debris that leaves the EDM machining location and may contaminate any adjoining or surrounding apparatus.

The increased viscosity of the dielectric gel in comparison to a dielectric fluid means that a smaller volume of dielectric material is required for the EDM process.

The dielectric gel can be deposited onto the article prior to the EDM process to enclose the article prior to the EDM erosion process, thereby making the process more convenient for a user.

Alternatively, the erosion electrode may be coated with the dielectric gel. This eliminates the requirement to separately deliver the dielectric gel to the region between the erosion electrode and the article. This makes the method more convenient for a user.

Optionally, the erosion electrode is hollow, and the dielectric gel is dispensed to the region bridging the erosion electrode and the article through the hollow erosion electrode.

The dielectric gel can also be injected into the region between the erosion electrode and the article through the hollow electrode. For example, a pneumatic delivery arrangement can eject the gel from the hollow electrode.

Optionally, an end of the erosion electrode is coated with the dielectric gel, and as the erosion electrode is moved towards the article, the dielectric gel bridges the region between the erosion electrode and the article.

In an alternative arrangement, the dielectric gel can be applied to an outer diametral surface of the erosion electrode prior to the EDM operation.

Optionally, the dielectric gel has a viscosity characteristic such that a viscosity of the dielectric gel decreases with an increase of the temperature of the region bridging the erosion electrode and the article.

An increase in electrode temperature due to sparking may allow the dielectric gel to decrease in viscosity resulting, for example, in the gel flowing into the region between the erosion electrode and the article as the EDM operation progresses. This may assist in the flow of the dielectric gel, for example, from inside the hollow erosion electrode into the region between the erosion electrode and the article, or the flow of the dielectric gel from the outer surface of the erosion electrode into this region.

Optionally, the method comprises the additional step of:
evacuating the dielectric gel from the region bridging the erosion electrode and the article.

As outlined above, the eroded debris and electrode material that is ejected from the erosion site is collected in the dielectric gel. Consequently, removal of the debris laden dielectric gel will conveniently remove the debris from the erosion site.

According to a third aspect of the present disclosure there is provided a computer program that, when read by a computer, causes performance of the method according to the first aspect.

According to a fourth aspect of the present disclosure there is provided a non-transitory computer readable storage medium comprising computer readable instructions that, when read by a computer, causes performance of the method according to the first aspect.

According to a fifth aspect of the present disclosure there is provided a signal comprising computer readable instructions that, when read by a computer, causes performance of the method according to the first aspect.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief Description of the Drawings

There now follows a description of an embodiment of the disclosure, by way of nonlimiting example, with reference being made to the accompanying drawings in which:
Figure 1 shows a schematic arrangement of an EDM apparatus comprising a dielectric gel according to a first embodiment of the disclosure;
Figure 2 shows a view of the arrangement of Figure 1 after the EDM process has commenced;
Figure 3 shows a view of the arrangement of Figure 1 with the dielectric gel being removed;
Figure 4 shows a schematic part sectional view of an erosion electrode according to a second embodiment of the disclosure; and
Figure 5 shows a schematic part sectional view of an erosion electrode according to a third embodiment of the disclosure.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

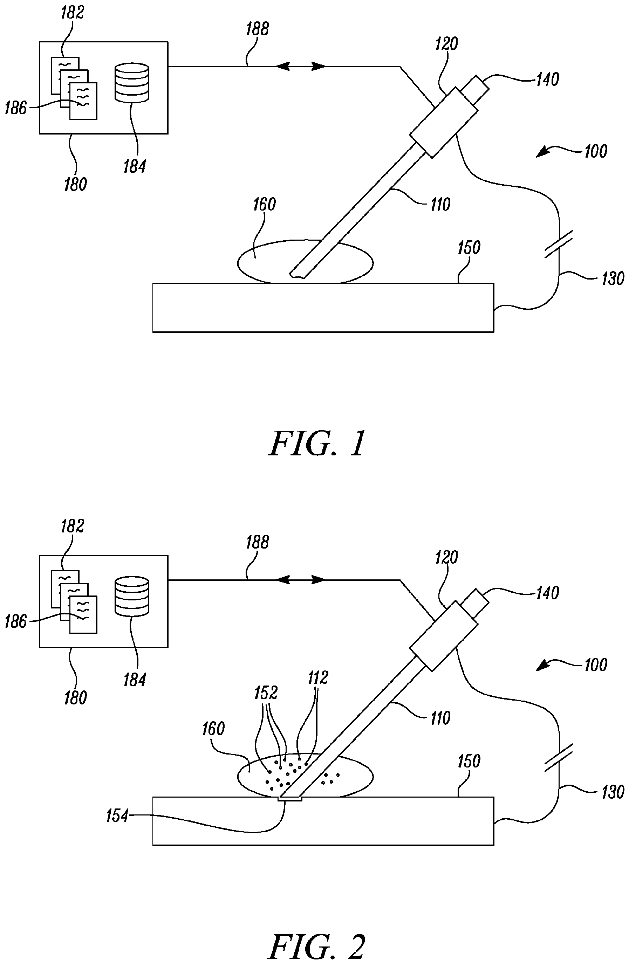

Referring to Figures 1 and 2, an EDM apparatus according to a first embodiment of the disclosure is designated generally by the reference numeral 100.

The EDM apparatus 100 comprises an erosion electrode 110, a housing 120, a ground electrode 130, and an erosion electrode advancing mechanism 140.

The housing 120 can be positioned against an article 150 to be eroded. Alternatively, the housing 120 may be located against some external fixture (not shown). The article 150 may be an assembly of components, or may be a single component. The article 150 may be a fastener that forms part of the assembly of components.

The ground electrode 130 is conductively connected to the article 150. The ground electrode 130 completes an electrical connection back to the erosion electrode 110. The dielectric gel 160 is provided in a quantity sufficient to bridge the region between the erosion electrode 110 and the article 150. The dielectric gel 160 can be applied to the article 150 either before or after the erosion electrode 110 is positioned proximal to the article 150.

In operation, the motion of the erosion electrode 110 relative to the article 150 is that of a conventional electro-discharge machining operation. An electric voltage in the form of a high frequency pulsed waveform is applied between the erosion electrode 110 and the article 150. The erosion electrode 110 is positioned against the article 150 with a small gap therebetween, which causes a spark to form in the gap. The details of this EDM operation are well known and will not be described further herein.

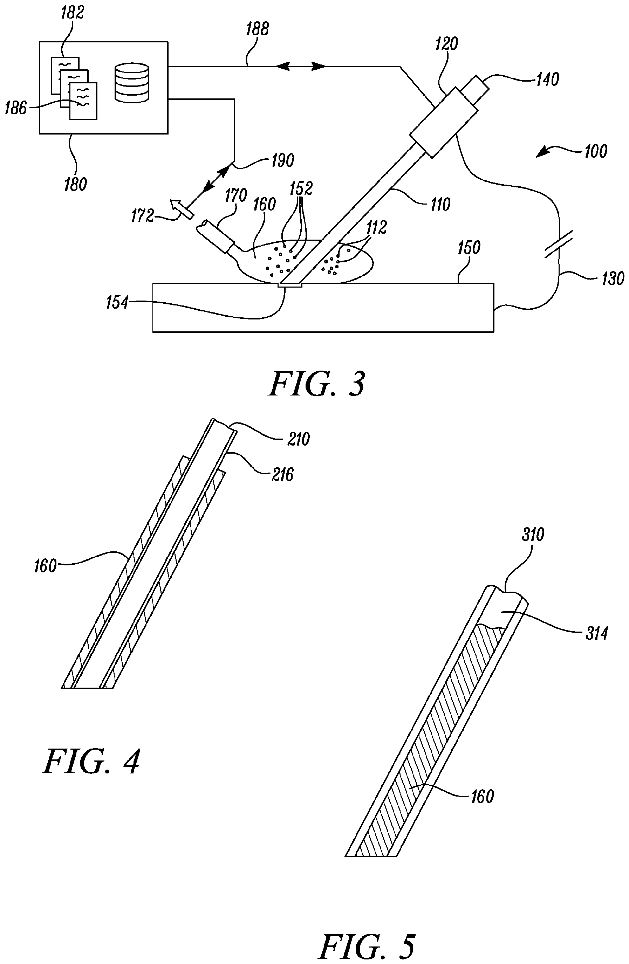

The EDM process results in eroded particles 154 from the article 150 together with erosion debris 112 from the erosion electrode 110. These eroded particles 154 and erosion debris 112 are ejected from the region between the erosion electrode 110 and the article 150. As these particles are ejected they are trapped in the dielectric gel 160, as illustrated in Figure 3.

As mentioned earlier, the electro-discharge machining process of the EDM device is conventional and includes an electro-deposition pulse controller that provides the pulsed voltage waveform to the erosion electrode 110. Control of the electro-deposition process and the EDM device 100 is achieved by a system controller. In one arrangement, the system controller takes the form of a computer 180 having a computer readable storage medium 184. The storage medium 184 comprises in turn a computer program 182, and computer readable instructions 186 that, when read by the computer 180 cause operation of the EDM device 100.

Referring to Figure 4, an erosion electrode 210 according to a second embodiment of the disclosure has the dielectric gel 160 applied in a coating to the external diametral surface 216 of the electrode 210. The dielectric gel 160 is applied in a thickness sufficient to ensure that the volume of dielectric gel 160 can completely bridge the region between the erosion electrode 110 and the article 150.

Figure 5 illustrates an erosion electrode 310 according to a third embodiment of the disclosure. The erosion electrode 310 has a hollow cross-section. In this arrangement, the dielectric gel 160 is accommodated in the hollow interior 314 of the erosion electrode 310.

In the examples of Figures 4 and 5, the erosion electrode 210,310 is shown as being hollow in cross-section. However, in alternative arrangements, the erosion electrode 210,310 may equally have a solid cross-section.

In one or more examples, the operations described may be implemented in hardware, software, firmware, or any combination thereof. If implemented in software, the operations may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more DSPs, general purpose microprocessors, ASICs, FPGAs, or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements.

The invention includes methods that may be performed using the subject devices. The methods may comprise the act of providing such a suitable device. Such provision may be performed by the end user. In other words, the "providing" act merely requires the end user obtain, access, approach, position, set-up, activate, power-up or otherwise act to provide the requisite device in the subject method. Methods recited herein may be carried out in any order of the recited events which is logically possible, as well as in the recited order of events.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A dielectric gel for use in electro-discharge machining, comprising a liquid solvent phase entrapped in a three-dimensionally cross-linked fibre network.

2. The dielectric gel as claimed in Claim 1, wherein the liquid solvent phase comprises a polar liquid selected from the group consisting of water, arsenic, bismuth, gallium, germanium, and silicon

3. The dielectric gel as claimed in Claim 1 or Claim 2, wherein the three-dimensionally cross-linked fibre network comprises hydrophilic polymers.

4. The dielectric gel as claimed in Claim 1, wherein the liquid solvent phase comprises an organic solvent and water.

5. The dielectric gel as claimed in Claim 4, wherein the organic solvent is selected from the group consisting of aliphatic and aromatic hydrocarbons, silicone oil, dimethyl sulfoxide, isopropyl myristate, and vegetable oils.

6. The dielectric gel as claimed in Claim 4 or Claim 5, wherein the three-dimensionally cross-linked fibre network comprises a fibrous structure formed by a gelator.

7. The dielectric gel as claimed in Claim 6, wherein the gelator is selected from the group consisting of lecithin, isopropyl myristate, isopropyl palmitate, dibutyllauroylglutamide, propylene glycol, polyethylene, polyhydric alcohols, sorbitan monostearate, sorbitan monopalmitate, and N-lauryl-L-alanine methyl ester.

8. A method of electro-discharge machining (EDM) an article, the article being located in a workpiece, the method comprising the steps of:
providing an EDM device comprising an erosion electrode, and a ground electrode;
positioning the erosion electrode proximal to the article;
positioning the ground electrode in conductive connection with the article;
providing a dielectric gel according to any one of Claims 1 to 7, to a region bridging the erosion electrode and the article;
moving the erosion electrode towards the article and into the dielectric gel; and
generating an electrical potential in the erosion electrode sufficient to cause a breakdown in a gap between the erosion electrode and the article, to thereby cause a portion of the article to be eroded, the eroded portion being suspended in the dielectric gel.

9. The method as claimed in Claim 8, wherein the erosion electrode is hollow, and the dielectric gel is dispensed to the region bridging the erosion electrode and the article through the hollow erosion electrode.

10. The method as claimed in Claim 8, wherein an end of the erosion electrode is coated with the dielectric gel, and as the erosion electrode is moved towards the article, the dielectric gel bridges the region between the erosion electrode and the article.

11. The method as claimed in any one of Claims 8 to 10, wherein the dielectric gel has a viscosity characteristic such that a viscosity of the dielectric gel decreases with an increase of the temperature of the region bridging the erosion electrode and the article.

12. The method as claimed in any one of Claims 8 to 11, wherein the method comprises the additional step of:
evacuating the dielectric gel from the region bridging the erosion electrode and the article.

13. A computer program that, when read by a computer, causes performance of the method as claimed in any one of Claims 8 to 12.

14. A non-transitory computer readable storage medium comprising computer readable instructions that, when read by a computer, causes performance of the method as claimed in any one of Claims 8 to 12.

15. A signal comprising computer readable instructions that, when read by a computer, causes performance of the method as claimed in any one of Claims 8 to 12.
